# DEMANDE DE BREVET EUROPEEN

(11) **EP 1 591 901 A1**
(43) Date de publication de la demande: **02.11.2005**
(21) Numéro de dépôt: 04291077.8
(22) Date de dépôt: 26.04.2004
(51) Int. Cl.: G06F 11/22

(54) **Procédé et système de test du transfert d'un programme d'un outil de développement à un terminal mobile**

(71) Demandeur: FRANCE TELECOM, 75015 Paris (FR)
(72) Inventeur: Vergouwen, Thomas, 92240 Malakoff (FR); Prouvost, Denis, 75015 Paris (FR); Alvarado, Cuihtlauac, 22300 Lannion (FR)
(74) Mandataire: Casalonga, Axel

(57) **Abrégé**

Pour tester un programme élaboré au moyen d'un outil de développement (12), qui est destiné à être hébergé dans des terminaux informatiques ou de télécommunication, on télécharge le programme dans un ou plusieurs terminaux et l'on exécute ce programme.

On élabore depuis l'outil de développement un ordre de téléchargement et, en réponse, on transmet depuis l'outil de développement (12) vers un serveur de téléchargement (14) le programme et des informations d'identification du ou des terminaux destinataires. Le programme est alors transmis du serveur vers le terminal, à partir des informations transmises, pour être exécuté dans le terminal.

## Description

L'invention concerne le téléchargement de programmes dans des terminaux informatiques ou de télécommunication et concerne, en particulier, un procédé et une installation de test de tels programmes.

Dans le cadre de la présente description, par terminal informatique ou de télécommunication, on entend tout type d'équipement ou de poste de télécommunication, tel qu'un poste téléphonique, un assistant personnel, ... et tout type de matériel informatique capable d'entrer en communication en utilisant un réseau de télécommunication.

Certains terminaux de télécommunication, dits terminaux de télécommunication « ouverts », permettent à leur utilisateur et à l'opérateur de télécommunication gestionnaire du réseau auquel ils appartiennent, de télécharger de nouveaux programmes afin de l'enrichir de nouvelles fonctionnalités et de proposer de nouveaux services. Ces programmes sont développés indépendamment au moyen d'outils de développement. Au cours de ce développement, les programmes subissent des phases de mise au point et de test, au cours desquelles ils sont installés dans les terminaux afin de vérifier leur bon fonctionnement. Comme on le conçoit, pour être efficaces, les phases de mise au point et de test nécessitent de mettre en oeuvre une technique de téléchargement identique à celle qui sera utilisée lors du fonctionnement normal du terminal pour le téléchargement des programmes.

Diverses techniques peuvent être utilisées à ce jour pour le téléchargement d'un programme dans un terminal.

Par exemple, un téléchargement par câble de connexion entre l'outil de développement et le terminal de test, peut être utilisé. Dans ce cas, une liaison directe existe entre l'outil de développement sur lequel se trouve le programme à tester et le terminal.

Un service support local, mettant par exemple en oeuvre une liaison infrarouge, Bluetooth ou Wi-Fi, permet, sur certains terminaux seulement, d'installer un nouveau programme. Cette technique nécessite également de prévoir une liaison directe entre l'outil de développement sur lequel se trouve le programme et le terminal.

On comprendra que ces techniques présentent un certain nombre d'inconvénients majeurs, relatifs notamment au fait que le téléchargement ne s'effectue pas dans des conditions normales correspondant aux conditions de téléchargement utilisées classiquement par un utilisateur final pour télécharger un programme dans un terminal informatique ou de télécommunication. De plus, ces techniques ne sont pas standards et ne fonctionnent donc que sur certains types de terminaux compatibles.

Le but de l'invention est donc de pallier ces inconvénients et de permettre de tester un programme élaboré dans un outil de développement par téléchargement de ce programme dans des conditions identiques et à celles qui sont utilisées lors du fonctionnement normal du terminal, c'est-à-dire hors phases de test, et ce, de manière universelle.

L'invention a donc pour objet un procédé de test d'un programme élaboré au moyen d'un outil de développement et qui est destiné à être hébergé dans des terminaux informatiques ou de télécommunication. Ce test s'effectue par téléchargement du programme dans un ou plusieurs terminaux et exécution du programme.

Ce procédé comporte les étapes consistant à :
- élaborer à partir de l'outil de développement un ordre de téléchargement ;
- transmettre, en réponse à l'ordre de téléchargement élaboré, le programme et des informations d'identification du ou des terminaux destinataires, depuis l'outil de développement vers un serveur de téléchargement ; et
- transmettre le programme du serveur vers le ou chaque terminal à partir des informations transmises,
ledit programme étant alors exécuté dans le terminal.

Selon une autre caractéristique du procédé selon l'invention, le programme est transmis au serveur après compilation.

Selon un mode de mise en oeuvre, le procédé objet de l'invention comporte en outre des étapes consistant à émettre vers le ou chaque terminal un message pour proposer le téléchargement du programme, la transmission du programme vers le ou chaque terminal étant effectuée après acquittement.

Dans un mode de réalisation, ce procédé comporte en outre une étape de contrôle d'accès, préalable à la transmission du programme vers le serveur, par contrôle d'un identifiant et d'un mot de passe.

Dans un mode de mise en oeuvre, on procède à un premier téléchargement d'un fichier descriptif d'un fichier contenant le code exécutable dudit programme à télécharger et à un deuxième téléchargement dudit fichier contenant le code exécutable à tester.

Le deuxième téléchargement peut être effectué après acquittement du message pour proposer le téléchargement du programme.

En outre, le message émis vers le ou chaque terminal pour proposer le téléchargement du programme véhicule de préférence l'adresse du fichier descriptif.

Le message émis vers le ou chaque terminal pour proposer le téléchargement du programme peut, en variante, contenir l'adresse d'un programme d'élaboration du fichier descriptif.

Dans ce cas, le fichier contenant le code exécutable du programme peut être stocké dans le serveur de téléchargement au moyen d'un identifiant unique à chaque nouveau téléchargement, à une adresse indiquée dans le fichier descriptif.

L'invention a également pour objet un système de test d'un programme élaboré au moyen d'un outil de développement et destiné à être hébergé dans les terminaux informatiques ou de télécommunication, par téléchargement du programme dans un ou plusieurs terminaux et exécution du programme.

Ce système comporte un serveur de téléchargement dans lequel le programme est destiné à être transféré en réponse à une demande de test du programme élaborée depuis un ou plusieurs terminaux, et un serveur de messagerie qui communique avec le serveur de téléchargement, ledit programme étant destiné à être transféré du serveur de téléchargement vers un ou plusieurs terminaux.

D'autres buts, caractéristiques et avantages de l'invention apparaîtront à la lecture de la description suivante, donnée uniquement à titre d'exemple non limitatif, et faite en référence aux dessins annexés, sur lesquels :
- la figure 1 est un schéma synoptique illustrant l'architecture d'un système de test d'un programme conforme à l'invention ;
- la figure 2 est une copie d'écran de l'outil de développement de l'architecture de la figure 1, illustrant le procédé de test conforme à l'invention ;
- la figure 3 est une autre copie d'écran de l'outil de développement de la figure 1, illustrant une étape de configuration des données nécessaires au contrôle d'accès ; et
- la figure 4 est un organigramme illustrant les principales phases du procédé de test selon l'invention.

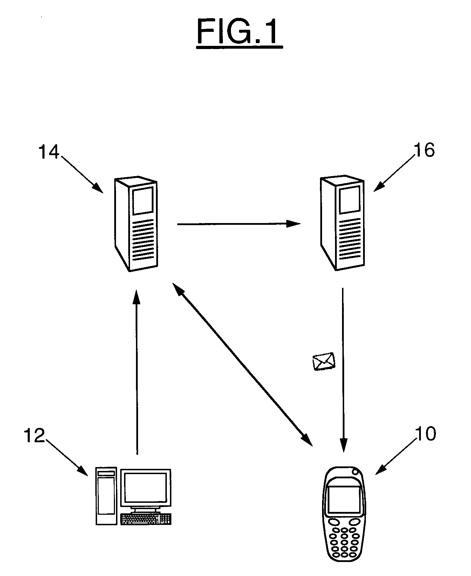

Sur la figure 1, on a représenté l'architecture générale d'un système de test d'un programme pour terminal informatique ou de télécommunication 10.

Dans l'exemple de mise en oeuvre représenté, le terminal 10 est constitué par un terminal de téléphonie mobile. Cependant, l'invention s'applique à tout type de terminal informatique ou de télécommunication, dans lequel un programme peut être téléchargé pour enrichir le terminal de nouvelles fonctionnalités.

Ce système est destiné à permettre à un développeur du programme de le télécharger de l'outil de développement 12, par exemple un micro-ordinateur, vers le poste 10 pour l'exécuter en vue de contrôler son bon déroulement. A cet effet, le système comporte un serveur de téléchargement 14 vers lequel le programme à tester est transféré, après compilation, ainsi qu'un serveur de messages courts SMS, référencé 16, destiné à transmettre des messages vers le terminal 10 pour proposer le téléchargement du programme et pour indiquer l'adresse dans laquelle le fichier contenant le programme est stocké au sein du serveur de téléchargement 14.

Ainsi, le serveur de messagerie 16 est par exemple constitué par un serveur de type SMS WAP Push connecté à un serveur SMSC (« Short Message Service Center »).

Tous les éléments de l'architecture de la figure 1 communiquent par l'intermédiaire d'un ou plusieurs réseaux de télécommunication.

Outre le serveur de téléchargement 14 et le serveur de messagerie 16, l'architecture est complétée par un module logiciel incorporé à l'outil de développement 12 qui est dûment programmé pour permettre le téléchargement direct de l'outil 12 vers le poste 10, en passant par le serveur de téléchargement 14 et par le serveur de messagerie 16.

Bien que le module logiciel intégré à l'outil de développement 12 puisse être constitué par une brique logicielle distincte d'un module logiciel permettant le développement du programme, on notera cependant que cette extension logicielle peut être incorporée au programme de l'outil de développement.

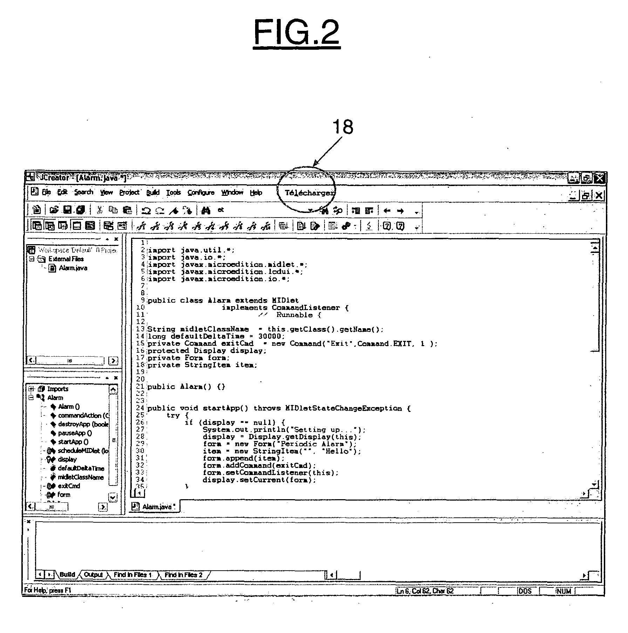

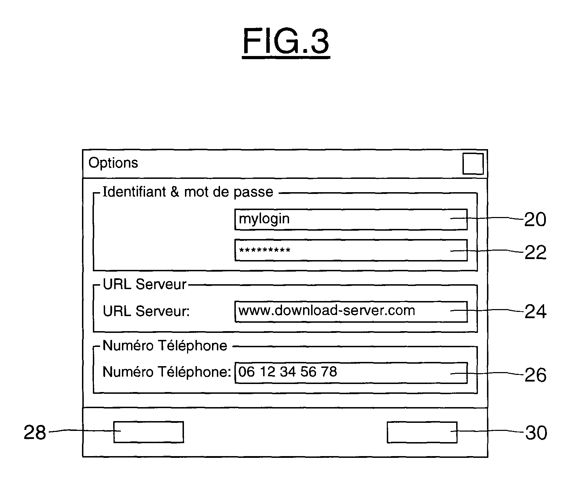

En se référant également aux figures 2 et 3 qui illustrent des copies d'écran de l'outil de programmation, cette extension logicielle est dûment programmée pour provoquer l'affichage sur l'écran de l'outil 12 d'une interface homme/machine permettant de régler les paramètres du service et de le mettre en oeuvre. Ainsi, par exemple, comme on le voit sur la figure 2, qui montre une fenêtre principale d'un logiciel de développement du programme, l'extension logicielle se matérialise, sur cette fenêtre, par une entrée 18 d'un menu permettant de lancer le téléchargement du programme, après compilation. Ainsi, lorsque le développeur clique sur l'entrée « télécharger » du menu, il lui est proposé un sous-menu à deux entrées permettant, soit de télécharger le programme qui vient d'être compilé, soit d'accéder à un menu de configuration de l'extension logicielle.

En référence à la figure 3, dans le cas d'une demande d'accès au menu de configuration, le programmeur est invité à renseigner un ensemble de champs 20, 22, 24, 26.

Par exemple, deux champs 20 et 22, intitulés « identifiant &, mot de passe » sont utilisés pour que le développeur saisisse son identifiant (« mylogin ») et son mot de passe pour lui permettre d'accéder à un espace dédié sur le serveur de téléchargement 14. Ces données lui auront été préalablement fournies par le gestionnaire du serveur 14 de téléchargement offrant le service de test du programme.

Le champ 24 intitulé « URL serveur » est utilisé pour que le développeur indique l'adresse URL (« www.download-server.com ») du serveur mis en oeuvre par le gestionnaire du serveur de téléchargement 14.

Enfin, dans le champ 26 intitulé « Numéro Téléphone », le développeur indique le ou les numéros de téléphone du ou des postes mobiles 10 dans lequel il souhaite télécharger le programme.

Des boutons 28 et 30 servent respectivement à valider les informations saisies ou à les annuler.

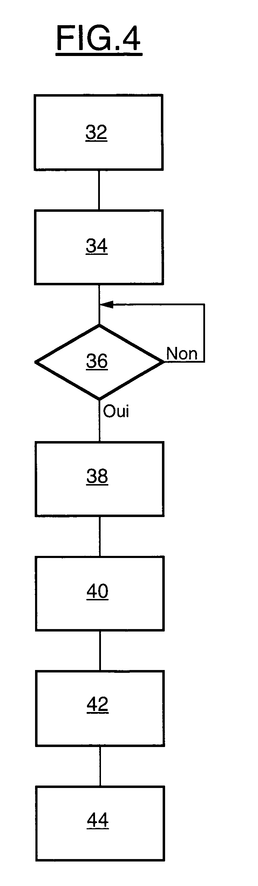

En se référant maintenant à la figure 4, après la saisie de ces informations d'identification (étape 32), l'extension logicielle intégrée à l'outil de développement 12 établit une télécommunication avec le serveur de téléchargement 14 (étape 34).

Lors de l'étape 36 suivante, qui constitue une étape optionnelle, le serveur de téléchargement contrôle l'identifiant et le mot de passe du développeur saisis lors de l'étape 32.

Lorsque ces informations ont été vérifiées, lors de l'étape 38 suivante, l'extension logicielle provoque le transfert du ou des fichiers contenant le programme à tester vers le serveur de téléchargement, à une ou plusieurs adresses de téléchargement. Après transfert, lorsque l'utilisateur souhaite procéder au téléchargement du fichier, du serveur de téléchargement vers le poste 10, il clique sur un bouton (non représenté) prévu à cet effet sur l'interface homme/machine. L'extension logicielle se connecte à nouveau au serveur de téléchargement 14 et requiert l'envoi d'un message SMS vers le ou les postes 10 identifiés par les numéros de téléphone saisis dans le champ 26 « Numéro Téléphone » (étape 40).

Lors de l'étape 42 suivante, le serveur SMS sollicité par le serveur de téléchargement 14, transmet alors un message à chaque poste 10 concerné, de préférence un message de type « push ».

Comme indiqué précédemment, ce message contient l'adresse URL qui pointe vers le fichier contenant le programme à télécharger. Selon le mécanisme associé aux messages « push », au cours de cette étape, lorsque le message est reçu par le poste 10, un message s'affiche à l'écran du poste, invitant le développeur à valider le téléchargement. Lorsque le développeur valide le message, la requête de téléchargement est transmise au serveur de téléchargement par le poste 10. Le serveur de téléchargement 14 retransmet alors, en réponse, le fichier contenant le programme à tester vers le poste mobile 10 (étape 44) au niveau duquel il est exécuté pour être testé.

Dans l'exemple de réalisation qui vient d'être décrit, le téléchargement d'un programme à tester s'effectue suite à deux manipulations ou « clics » de la part d'un utilisateur qui commandent l'une le transfert du fichier de l'outil de développement vers le serveur de téléchargement 14 et l'autre l'envoi du message SMS du serveur de messagerie 16 vers le terminal. Il est également possible, en variante, d'utiliser un mode de fonctionnement selon lequel ces deux phases s'effectuent successivement en réponse à une unique action de l'utilisateur.

Dans un mode de réalisation particulier, selon lequel le code à télécharger nécessite un premier téléchargement d'un premier fichier descriptif du fichier contenant le programme à tester et un deuxième téléchargement pour le téléchargement proprement dit du code, en passant par un serveur de téléchargement qui met en oeuvre une mémoire cache, le téléchargement s'effectue en deux étapes. Tel est par exemple le cas dans une application particulière selon laquelle le programme à tester est une application écrite en langage de programmation Java et constitue un programme d'application Java MIDP (« Mobile Information Device Profile »), selon laquelle, par exemple, le téléchargement s'effectue par l'intermédiaire d'une passerelle du protocole WAP (« Wireless Application Protocol ») mettant en oeuvre une mémoire cache, et selon laquelle le téléchargement met en oeuvre un serveur de messagerie SMS, de type WAP push.

Tout d'abord, on procède à un téléchargement d'un fichier descriptif de type JAD (« Java Application Descriptor ») du serveur de téléchargement 14 vers le poste 10. Ce fichier, qui est de petite taille, typiquement de l'ordre de 1 kilo octet, contient la description du programme à télécharger, en terme de taille, de type, de version, ... Le contenu de ce fichier JAD est présenté à l'utilisateur qui valide le téléchargement. Après validation, le téléchargement d'un fichier JAR (« Java ARchive ») qui contient le code exécutable ainsi que les fichiers utilisés par le programme, est effectué.

Ce mode de réalisation permet d'annuler le téléchargement avant même qu'il n'ait été effectivement entamé et est par exemple avantageux dans le cas où le poste 10 ne contient pas suffisamment de mémoire disponible pour installer le programme. On évite ainsi d'entamer un téléchargement de programme qui, par la suite, devrait être interrompu par manque de mémoire disponible.

Comme dans le mode de réalisation précédemment décrit, ce mode de réalisation met en oeuvre la transmission d'un message du serveur de messagerie 16 vers le terminal, qui véhicule l'adresse URL du fichier qui contient le descriptif du programme à télécharger.

Lorsque le développeur confirme sa demande, le poste 10 invoque l'adresse URL contenue dans le message SMS et télécharge ainsi le premier fichier JAD descriptif.

Comme indiqué précédemment, ce fichier, de format standard, véhicule l'adresse URL du fichier JAR stocké dans le serveur et qui contient le programme proprement dit.

A la réception du fichier JAD, le poste présente automatiquement au développeur les informations relatives au programme. Lorsque le développeur confirme à nouveau sa demande de téléchargement, le poste 10 télécharge alors le fichier JAR et installe le programme. Le développeur peut ainsi tester son programme dans son terminal.

Selon ce mode de réalisation, le téléchargement des deux fichiers JAD et JAR s'effectue à travers une passerelle WAP. Comme on le sait, la plupart de ces passerelles mettent en oeuvre une mémoire cache qui permet de stocker pendant une durée prédéterminée les fichiers fréquemment demandés afin d'optimiser les accès.

Comme on le conçoit, ce mécanisme de mémoire cache peut être préjudiciable dans le cadre de la présente invention, dans la mesure où un développeur peut être amené à télécharger de multiples versions de son programme, successivement modifié. En raison de la présence de cette mémoire cache, une demande de téléchargement d'une version ultérieure d'un même programme provoquerait, en fait, le téléchargement du fichier stocké momentanément dans la mémoire cache. Pour pallier cet inconvénient, le message SMS contient une adresse URL dynamique qui pointe vers un code d'instruction qui, lorsqu'il est appelé, s'exécute au sein du serveur de téléchargement 14 et qui est adapté pour générer automatiquement le fichier JAD.

Ainsi, le contenu de l'adresse URL ne peut être mis en mémoire cache par la passerelle WAP.

Afin de pallier les inconvénients liés à la présence de la mémoire cache, le fichier JAR, tel que reçu par le poste 10, est copié sur le serveur de téléchargement sous un nom fixe élaboré aléatoirement. Le choix du nom de ce fichier est cependant effectué de manière que ce nom reste unique pendant au moins une durée strictement supérieure à la durée de stockage des données dans la mémoire cache de la passerelle. C'est l'adresse URL de ce fichier JAR à nom unique qui est indiquée dans le fichier descriptif JAD généré dynamiquement.

Ainsi, grâce à ce mécanisme, le développeur peut télécharger à des intervalles rapprochés un même programme sous le même nom, sans être pénalisé par les problèmes liés à la présence de la mémoire cache dans la passerelle WAP.

Cette solution au problème lié à la présence de la mémoire cache peut également s'appliquer à tout type de téléchargement de programmes ou de données classique.

## Revendications

1. Procédé de test d'un programme élaboré au moyen d'un outil de développement (12), ledit programme étant destiné à être hébergé dans des terminaux (10) informatiques ou de télécommunication, par téléchargement du programme dans un ou plusieurs terminaux et exécution du programme, **caractérisé en ce qu'**il comporte les étapes consistant à :
- élaborer à partir de l'outil de développement un ordre de téléchargement ;
- transmettre, en réponse à l'ordre de téléchargement élaboré, le programme et des informations d'identification du ou des terminaux destinataires, depuis l'outil de développement vers un serveur de téléchargement (14) ; et
- transmettre le programme du serveur (14) vers le ou chaque terminal à partir des informations transmises,
ledit programme étant alors exécuté dans le terminal.

2. Procédé selon la revendication 1, **caractérisé en ce que** le programme est transmis au serveur (14) après compilation.

3. Procédé selon l'une quelconque des revendications 1 et 2, **caractérisé en ce qu'**il comporte en outre une étape consistant à émettre vers le ou chaque terminal (10) un message pour proposer le téléchargement du programme, le programme étant transmis vers le ou chaque terminal après acquittement dudit message.

4. Procédé selon l'une quelconque des revendications 1 à 3, **caractérisé en ce qu'**il comporte en outre une étape de contrôle d'accès, préalable à la transmission du programme vers le serveur, par contrôle d'un identifiant et d'un mot de passe.

5. Procédé selon l'une quelconque des revendications 1 à 4, **caractérisé en ce que** l'on procède à un premier téléchargement d'un fichier descriptif (JAD) d'un fichier contenant le code exécutable du programme à télécharger et à un deuxième téléchargement dudit fichier (JAR) contenant le code exécutable à tester.

6. Procédé selon l'une quelconque des revendications 3 à 5, **caractérisé en ce que** le deuxième téléchargement est effectué après acquittement du message pour proposer le téléchargement du programme.

7. Procédé selon l'une des revendications 5 et 6, **caractérisé en ce que** le message émis vers le ou chaque terminal (10) pour proposer le téléchargement du programme véhicule l'adresse du fichier descriptif.

8. Procédé selon l'une des revendications 5 et 6, **caractérisé en ce que** le message émis vers le ou chaque terminal pour proposer le téléchargement du programme véhicule l'adresse d'un programme d'élaboration du fichier descriptif.

9. Procédé selon la revendication 8, **caractérisé en ce que** le fichier contenant le code exécutable du programme est stocké dans le serveur de téléchargement (14) au moyen d'un identifiant unique à une adresse indiquée dans le fichier descriptif.

10. Système de test d'un programme élaboré au moyen d'un outil de développement (12), ledit programme étant destiné à être hébergé dans des terminaux (10) informatiques ou de télécommunication, par téléchargement du programme dans un ou plusieurs terminaux et exécution du programme, **caractérisé en ce qu'**il comporte un serveur de téléchargement (14) dans lequel le programme est destiné à être transféré en réponse à une demande de test du programme élaborée depuis un ou plusieurs terminaux, et un serveur de messagerie (16) qui communique avec le serveur de téléchargement, ledit programme étant destiné à être transféré du serveur de téléchargement vers un ou plusieurs terminaux.
